Europäisches Patentamt

European Patent Office

Office européen des brevets

(19)

(11) Veröffentlichungsnummer: **0 1 1 5 609**
**B1**

(12) # EUROPÄISCHE PATENTSCHRIFT

(45) Veröffentlichungstag der Patentschrift:
24.05.89

(21) Anmeldenummer: 83112706.3

(22) Anmeldetag: 16.12.83

(51) Int. Cl.⁴: **G 06 F 12/06**

(54) **Schaltungsanordnung zur Adressierung der Speicher mehrerer datenverarbeitender Einrichtungen in einem Mehrprozesssorsystem.**

(30) Priorität: 11.01.83 DE 3300699

(43) Veröffentlichungstag der Anmeldung:
15.08.84 Patentblatt 84/33

(45) Bekanntmachung des Hinweises auf die Patenterteilung:
24.05.89 Patentblatt 89/21

(84) Benannte Vertragsstaaten:
DE FR GB IT NL SE

(56) Entgegenhaltungen:
EP-A- 0 106 556
AT-A- 354 783
US-A- 4 253 144
US-A- 4 315 310

IBM TECHNICAL DISCLOSURE BULLETIN, Band 22, Nr. 7, Dezember 1979, Seiten 2883-2884, New York, US; K. MARTON et al.: "Memory addressing scheme for loosely coupled processors"
IBM TECHNICAL DISCLOSURE BULLETIN, Band 7, Nr. 5, Oktober 1964, Seiten 352-353, New York, US; J. THOMAS: "Shared memory addressing system"
COMPUTER DESIGN, Band 20, Nr. 10, Oktober 1981, Seiten 179-184, Winchester, Mass., US; W.S. ANG: "Common element key to multiprocessors architecture"

(73) Patentinhaber: **Nixdorf Computer Aktiengesellschaft, Fürstenallee 7, D-4790 Paderborn (DE)**

(72) Erfinder: **Stähle, Peter, Dipl.-Ing., Brede 6, D-4790 Paderborn (DE)**

(74) Vertreter: **Schaumburg, Thoenes & Englaender, Mauerkircherstrasse 31 Postfach 86 07 48, D-8000 München 80 (DE)**

## Beschreibung

Die Erfindung betrifft eine Schaltungsanordnung zum Adressieren der jeweils ein Adreßvolumen aufweisenden Speicher mehrerer datenverarbeitender Einrichtungen in einem Mehrprozessorsystem mit Systembus, in dem jeder auf einen Speicher zugreifende Prozessor die Adresse einer jeden Speicherzelle des Mehrprozessorsystems erzeugen kann, wobei jeder Prozessor auf den ihm zugeordneten Speicher auf einem internen Zugriffspfad ab Adresse Null und auf einen externen Speicher über den Systembus unter einer externen Adresse zugreift, die auf die Anfangsadresse des durch Aneinanderreihen der einzelnen Adreßvolumina gebildeten Gesamtadreßvolumens bezogen ist.

In einem Mehrprozessorsystem kann zu einer an den Systembus angeschlossenen datenverarbeitenden Einrichtung bzw. Prozessor auch ein interner Speicher gehören. Ferner können an den Systembus auch externe Speicher angeschaltet sein, die eine datenspeichernde Einrichtung darstellen, welche als Speicher mit den an den Systembus angeschlossenen Prozessoren bzw. Rechnern sowie auch mit DMA-Einheiten korrespondieren können, die gleichfalls an den Systembus angeschlossen sind. Eine DMA-Einheit enthält ein DMA-Gerät für direkten Speicherzugriff sowie eine zugehörige Gerätesteuerung. Sie steht mit einem Datenendgerät in Verbindung, an dem Daten eingegeben oder ausgegeben bzw. dargestellt werden können.

Alle diese datenverarbeitenden Einrichtungen können über den Systembus miteinander korrespondieren, d.h. Informationen austauschen, die letztlich immer bei einer sendenden Einrichtung ausgespeichert und bei einer empfangenden Einrichtung eingespeichert werden müssen. Hierzu ist eine Speicheradressierung erforderlich, wozu die sendende Einrichtung ein Adressensignal erzeugt und auf den Systembus weiterleitet, welches über den Systembus übertragen wird und zu einer oder mehreren anderen Einrichtungen gelangt, wo es nach dem Empfang darauf überprüft wird, ob die mit ihm übertragene Adresseninformation zu dem Adreßvolumen des in der empfangenden Einrichtung jeweils vorhandenen Speichers gehört. Ist dies nicht der Fall, so wird in der empfangenden Einrichtung kein weiterer Schaltvorgang ausgelöst. Paßt die Adresseninformation jedoch in das Adreßvolumen des Speichers einer empfangenden Einrichtung, so ist damit die durch das Adressensignal angesteuerte Einrichtung erreicht, und der Speicher dieser Einrichtung kann dann weitere von der sendenden Einrichtung über den Systembus zu übertragende Informationen aufnehmen.

Man hat nun bisher die internen Speicher von Prozessoren, die mit einem Systembus verbunden sind, selektiv derart adressiert, daß ein Adressenwort die Adresse des gewünschten Prozessors und ein weiteres Adressenwort dann die Adresse eines Speicherplatzes des in diesem Prozessor vorhandenen internen Speichers darstellt. Ein

Nachteil eines solchen Adressierverfahrens besteht in der für die zweistufige Adressierung erforderlichen Zeit. Außerdem muß das Mehrprozessorsystem für diese in zwei Schritten ablaufende Adressierung besonders aufgebaut sein, da entweder zwei zeitlich aufeinanderfolgende Schritte eine entsprechende zeitliche Steuerung der Adressierung benötigen oder aber bei gleichzeitiger Übertragung der unterschiedlichen Adreßabschnitte eigens zugeordnete Leitungsadern erforderlich sind. Ein weiterer Nachteil besteht in dem für zwei unterschiedliche Adreßabschnitte erforderlichen besonderen Steueraufwand bei der Verbindungsherstellung mit einem gewünschten Speicher.

Durch «IBM Technical Disclosure Bulletin» Band 7, Nr. 5, Oktober 1964, Seiten 352 bis 353, ist eine Schaltungsanordnung eingangs genannter Art bekannt, die eine Speicheradressierung ohne besondere Leitungsadern ermöglicht. Dieses bekannte Prinzip setzt aber Speicher übereinstimmender Größe von jeweils 32 KByte voraus, die mit oktalen Adreßworten adressiert werden, wobei fünf Stellen zur Speicherplatzadressierung und die zwei höchstwertigen Stellen zur Speicheradressierung dienen. Die Adressierung erfolgt über eine Speicherauswahleinheit, die die zwei höchstwertigen Stellen des jeweiligen Adreßwortes auswertet und den jeweils anzusteuernden Speicher mit einer externen Adresse auswählt.

Mit diesem Prinzip ist es nicht möglich, die einzelnen Speicher mit beliebig großen unterschiedlichen Speichervolumina auszustatten, die sich dann noch hinsichtlich der Adressierung lückenlos aneinanderreihen. Hat einer der Speicher ein geringeres Speichervolumen als die anderen, so entsteht eine Adreßlücke. Auch eine Erhöhung des Speichervolumens eines Speichers ist nicht möglich, weil dann ein weiteres Bit des Adreßwortes benötigt wird, welches aber nicht verfügbar ist.

Es ist Aufgabe der Erfindung, eine Schaltungsanordnung anzugeben, die unter Anwendung dieses vorbekannten Adressierprinzips arbeitet und dabei auch die Adressierung unterschiedlich großer Speicher in einem lückenlosen Gesamtadreßvolumen gestattet.

Die Erfindung löst diese Aufgabe bei einer Schaltungsanordnung eingangs genannter Art dadurch, daß die externe Adresse im zugreifenden Prozessor erzeugt wird, indem zunächst eine auf dessen Adresse Null bezogene Zwischenadresse gebildet wird, die dann um den Wert der externen Anfangsadresse seines zugeordneten Speichers erhöht wird, und daß jede im Zuge eines Speicherzugriffs über den Systembus empfangene Adresse in jedem empfangenden Prozessor um den Wert der externen Anfangsadresse des ihm zugeordneten Speichers verringert wird.

Bei der Erfindung wird die jeweilige externe Adresse im zugreifenden Prozessor selbst erzeugt, so daß dazu keine besondere Speicherauswahleinheit benötigt wird. Die Art der Adreßerzeugung ist unabhängig von dem Speichervolumen des jeweils zu adressierenden Speichers, so daß die im System vorhandenen Speicher unterschiedlich groß sein können und doch ein lückenloses Gesamtadreßvolumen vorliegt.

Wenn man die unterschiedlich großen Adreßvolumina der Speicher der datenverarbeitenden Einrichtungen kontinuierlich aneinanderreiht, so entsteht ein Gesamtadreßvolumen, dessen Größe die Summe aller einzelnen Adreßvolumina ist. Wenn nun jeder mit dem Systembus verbundene Prozessor selbst alle möglichen Adressen innerhalb dieses Gesamtadreßvolumens erzeugen kann, so ist die direkte Ansteuerung einer jeden im System vorhandenen Speicherzelle möglich. Die Adreßworte sind dabei zwar relativ lang, jedoch können sie in einem einzigen und nicht in zwei Steuerschritten übertragen und ausgewertet werden.

Bei der Erfindung wird die jeweils von einer datenverarbeitenden Einrichtung abzugebende Adresse vor ihrer Weiterleitung über den Systembus in ganz bestimmter Weise aufgebaut. Hierzu wird davon ausgegangen, daß innerhalb des kontinuierlichen Gesamtadreßvolumens das Adreßvolumen des Speichers der jeweils sendenden datenverarbeitenden Einrichtung eine bestimmte Lage hat, da das Gesamtadreßvolumen durch Aneinanderreihung der Einzeladreßvolumina entstanden ist. Wenn nun das Gesamtadreßvolumen, von jeder einzelnen datenverarbeitenden Einrichtung aus gesehen, bei der Anfangsadresse des zu dieser Einrichtung gehörenden Speichers beginnt, so ist die in dieser datenverarbeitenden Einrichtung erzeugte Adresse einer Speicherzelle in einer anderen datenverarbeitenden Einrichtung auf diese Anfangsadresse bezogen, so daß jede Speicherzelle aller Speicher des Systems durch eine von der Lage des jeweiligen Prozessors im System abhängige Adresse angesteuert wird, was bedeutet, daß zunächst eine Zweideutigkeit bei der Adressierung von Speicherzellen besteht. Um diese Zweideutigkeit zu beseitigen, muß die jeweils abzugebende Adresse in der sendenden datenverarbeitenden Einrichtung so umgesetzt werden, daß sie bei Übertragung über den Bus nur in einer der anderen datenverarbeitenden Einrichtungen als Ansteueradresse für den zugehörigen Speicher ausgewertet wird. Dies erfolgt nun dadurch, daß die zu übertragende Adresse, die zunächst auf die interne Anfangsadresse des Speichers des sendenden Prozessors bezogen ist, um den Wert der externen Anfangsadresse dieses Speichers erhöht wird, wobei diese externe Anfangsadresse aber auf ein mit der Anfangsadresse des Speichers der ersten datenverarbeitenden Einrichtung beginnendes Gesamtadreßvolumen bezogen ist. Die so erhöhte Adresse wird dann über den Bus übertragen und ist in jedem Falle auf ein Gesamtadreßvolumen bezogen, welches, vom Bus her gesehen, für alle datenverarbeitenden Einrichtungen gleich ist und dieselbe Anfangsadresse aufweist. Wenn die so übertragene Adresse auf die empfangsbereiten datenverarbeitenden Einrichtungen gelangt, so wird sie dort jeweils überprüft. Diese Überprüfung erfolgt erst dann, wenn in jeder datenverarbeitenden Einrichtung eine Verringerung der empfangenen Adresse vorgenommen ist. Diese Verringerung erfolgt um einen Wert, der der für den Speicher der jeweils prüfenden datenverarbeitenden Einrichtung maßgebenden externen Anfangsadresse entspricht.

Wie noch anhand eines Ausführungsbeispiels beschrieben wird, geschieht nach diesem Verfahren in jedem Falle eine eindeutige und direkte Ansteuerung der jeweils gewünschten Speicherzelle ohne zusätzliche mehrschrittige Steuervorgänge. Die jeweils erzeugte Adresse durchläuft vor dem Senden bzw. nach dem Empfangen im jeweiligen Prozessor lediglich einen Additionsbzw. Subtraktionsschritt, ohne daß aufwendige mehrschrittige Decodierungen oder Voradressierungen bzw. Adreßzuordnungen erforderlich sind.

Ein Ausführungsbeispiel und Weiterbildungen der Erfindung werden aus der folgenden Figurenbeschreibung ersichtlich. Im einzelnen zeigen:

Fig. 1 den allgemeinen Aufbau eines Mehrfach-Leitungssystems mit datenverarbeitenden Einrichtungen,

Fig. 2 ein bei einem Verfahren nach der Erfindung angewandtes Prinzip der Adreßerzeugung,

Fig. 3 ein Ausführungsbeispiel einer Schaltung zur Durchführung des erfindungsgemäßen Verfahrends gemäß einer ersten Variante bei einer sendenden Datenverarbeitungseinrichtung und

Fig. 4 ein Ausführungsbeispiel einer Schaltung zur Durchführung der ersten Variante des erfindungsgemäßen Verfahrens bei einer empfangenden Datenverarbeitungseinrichtung.

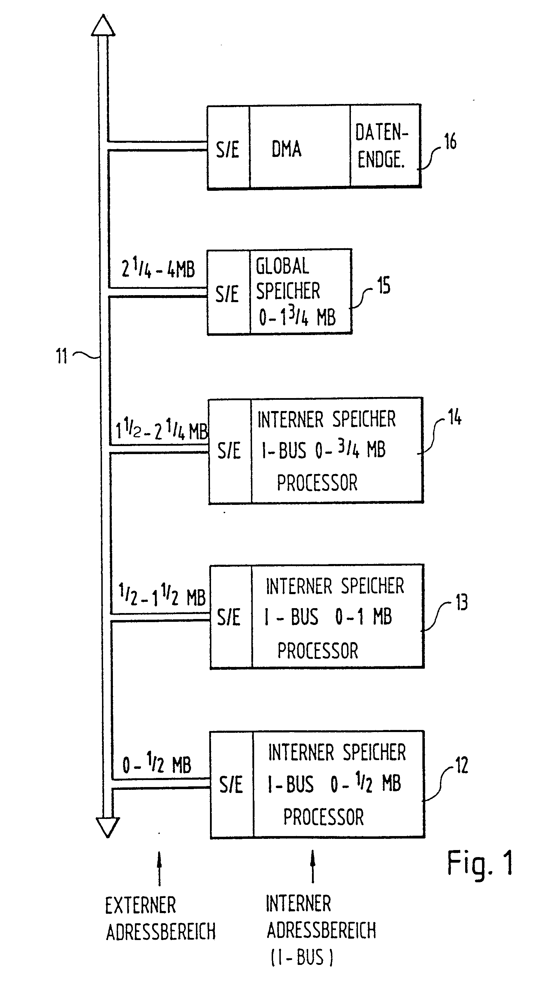

In Fig. 1 ist der allgemeine Aufbau eines Mehrfach-Leitungssystems dargestellt, das einen Bus 11 und mehrere datenverarbeitende bzw. datenspeichernde Einrichtungen 12 bis 16 umfaßt. Diese können über den Bus 11 miteinander in Verbindung treten und Informationen austauschen. Bei den Einrichtungen 12 bis 16 kann es sich um unterschiedlich aufgebaute Einrichtungen handeln. So sind beispielsweise die Einrichtungen 12, 13 und 14 Prozessoreinheiten, die jeweils Signalsender und Signalempfänger S/E, einen Prozessor, einen internen Speicher und einen internen Bus enthalten. Die Einrichtung 15 ist eine globale Speichereinheit und enthält Signalsender und Signalempfänger S/E sowie einen globalen Speicher. Die Einrichtung 16 ist eine DMA-Einheit und enthält Signalsender und Signalempfänger S/E sowie eine DMA-Steuerung für direkten Speicherzugriff, die ihrerseits mit einem Datenendgerät in Verbindung stehen kann. Der Bus 11 besteht aus einem Bündel mehrerer Signalleitungen, über die ein beliebiges Korrespondieren zweier oder mehrerer datenverarbeitender Einrichtungen untereinander möglich ist. Jede datenverarbeitende Einrichtung 12 bis 16 kann den Speicher einer anderen datenverarbeitenden Einrichtung ansteuern, um mit diesem Speicher ggf. unter Hinzuziehung des eigenen Speichers Informationen auszutauschen. Hierzu muß der von einer sendenden Einrichtung jeweils gewünschte Speicher einer empfangenden Einrichtung adressiert werden, wozu das im folgenden zu beschreibende Adressierungsverfahren durchgeführt wird.

Hierzu sei zunächst die Organisation der Adreßvolumina der einzelnen Einrichtungen erläutert. Wie Fig. 1 zeigt, ist ein externer Adreßbereich zwischen den einzelnen Einrichtungen 12 bis 15 und dem Bus 11 vorgesehen. Dieser externe Adreßbereich hat ein Gesamtadreßvolumen, das für das in Fig. 1 gezeigte Beispiel einen Umfang von 0 bis 4 MByte hat. Dieses Gesamtadreßvolumen setzt sich aus den einzelnen Adreßvolumina der Einrichtungen 12 bis 15 zusammen, wobei angenommen sei, daß die Einrichtung 12 einen internen Speicher mit einem internen Adreßvolumen von 0 bis $\frac{1}{2}$ MB, die Einrichtung 13 einen internen Speicher mit einem Adreßvolumen von 0 bis 1 MB, die Einrichtung 14 einen internen Speicher mit einem Adreßvolumen von 0 bis $\frac{3}{4}$ MB und die Einrichtung 15 einen globalen Speicher mit einem Adreßvolumen von 0 bis $1\frac{3}{4}$ MB hat. Die Einrichtung 16 enthält als DMA-Einheit keinen internen Speicher.

Anhand der Fig. 1 ist zu erkennen, daß die einzelnen Adreßvolumina der Einrichtungen 12 bis 15 insgesamt ein Adreßvolumen von 0 bis 4 MB bilden, welches den externen Adreßbereich darstellt. Der interne Adreßbereich ist für die jeweilige Einrichtung 12 bis 15 durch das interne Adreßvolumen gebildet. Innerhalb dieses internen Adreßvolumens kann der jeweilige Prozessor mit dem jeweils zugehörigen internen Speicher über den internen Bus (J-Bus) korrespondieren.

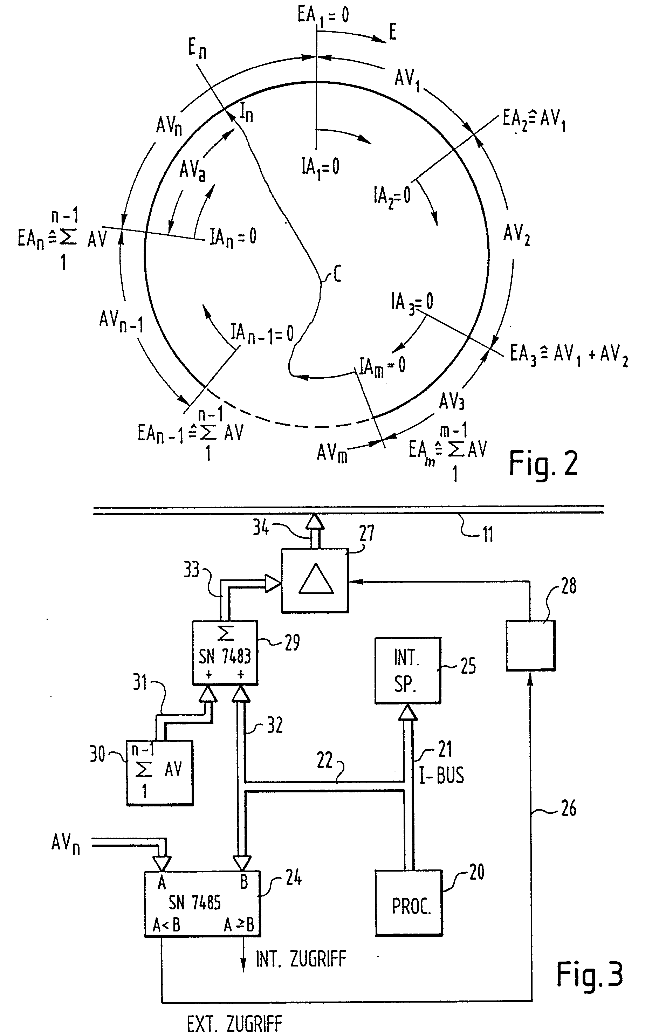

Anhand der Fig. 2 soll nun erläutert werden, wie die Adressierung des Speichers einer datenverarbeitenden Einrichtung von einer sendenden Einrichtung her über den Bus erfolgt, indem das erfindungsgemäße Verfahren angewendet wird. Fig. 2 zeigt hierzu eine schematische, kreisförmige Darstellung eines Gesamtadreßvolumens, welches sich aus einzelnen Adreßvolumina $AV_1$, $AV_2$, $AV_3 \ldots AV_{n-1}$, $AV_n$ zusammensetzt. Für dieses Gesamtadreßvolumen

$$\sum_1^n AV$$

existiert eine externe Anfangsadresse $EA_1$, die beispielsweise den Anfangswert 0 hat. Ausgehend von dieser Anfangsadresse kann das in Richtung des in Fig. 2 gezeigten Pfeiles E zusammengesetzte Gesamtadreßvolumen als die Summe der Adreßvolumina einzelner datenverarbeitender Einrichtungen verstanden werden, wie sie in Fig. 1 bei 12 bis 15 dargestellt sind. Bei dieser Darstellung ist für jedes Adreßvolumen AV eine externe Anfangsadresse EA angegeben, die für den durch das Gesamtadreßvolumen gebildeten externen Adreßbereich dem Adreßvolumen entspricht, welches ihr auf dem Kreis in Richtung des Pfeiles E jeweils vorgeordnet ist. So entspricht beispielsweise die externe Anfangsadresse $EA_2$ dem Wert des Adreßvolumens $AV_1$, und die Anfangsadresse $EA_3$ entspricht dem Wert der vorhergehenden Adreßvolumina, nämlich der Summe $AV_1 + AV_2$. Allgemein gilt dann die Beziehung

$$EA_m \triangleq \sum_1^{m-1} AV$$

Fig. 1 zeigt ferner interne Anfangsadressen für jedes einzelne Adreßvolumen AV. Jede interne Anfangsadresse hat den Wert 0.

Wenn nun jede der datenverarbeitenden Einrichtungen 12 bis 15 (Fig. 1) in der Lage ist, eine Anzahl von Adressen zu erzeugen, die dem Gesamtadreßvolumen entspricht, wie es beispielsweise in Fig. 2 dargestellt ist, so ist es möglich, in der im folgenden zu beschreibenden Weise jede Speicherzelle sämtlicher datenverarbeitender Einrichtungen direkt anzusteuern. Hierzu ist beispielsweise angenommen, daß gemäß dem in Fig. 2 schematisch angedeuteten Verbindungsweg C aus einer datenverarbeitenden Einrichtung mit dem Adreßvolumen $AV_m$ eine Speicherzelle im Adreßvolumen $AV_n$ adressiert werden soll, die dort die interne Adresse $J_n$ und die externe Adresse $E_n$ hat.

Da voraussetzungsgemäß jede datenverarbeitende Einrichtung in der Lage ist, eine Zahl von Adressen zu erzeugen, die dem Gesamtadreßvolumen entspricht, und da in jeder datenverarbeitenden Einrichtung in noch zu beschreibender Weise eine Information darüber vorliegt, an welcher Stelle ihr Adreßvolumen in das Gesamtadreßvolumen eingeordnet ist, kann die datenarbeitende Einrichtung mit dem Adreßvolumen $AV_m$ eine Adresse erzeugen, die ausgehend von der internen Anfangsadresse $JA_m$ einen Wert hat, der der Summe der Adreßvolumina in Richtung des in Fig. 2 durch den Pfeil E gezeigten Umlaufsinnes bis zur externen Adresse $E_n$ bzw. $J_n$ entspricht. Der Wert dieser Adresse beträgt dann

$$\sum_m^{n-1} AV + AV_a$$

Damit dieser Wert in den externen Adreßbereich einzuordnen ist und eindeutig zur Ansteuerung der Speicherzelle innerhalb des Adreßvolumens $AV_n$ mit der internen Adresse $J_n$ genutzt werden kann, muß er auf die externe Anfangsadresse $EA_1$ bezogen werden. Dies geschieht dadurch, daß in der sendenden datenverarbeitenden Einrichtung eine Erhöhung der in zuvor beschriebener Weise erzeugten Adresse um die externe Anfangsadresse $EA_m$ vorgenommen wird, und daß diese so erhöhte Adresse dann über den Bus 11 (Fig. 1) übertragen wird.

In allen mit dem Bus 11 verbundenen datenverarbeitenden Einrichtungen wird dann die auf dem Bus 11 erscheinende und in der sendenden verarbeitenden Einrichtung um deren externe Anfangsadresse $EA_m$ erhöhte Adresse um die externe Anfangsadresse vermindert, die der jeweiligen datenverarbeitenden Einrichtung entspricht. Im Falle der Einrichtung mit dem Adreßvolumen $AV_n$ wird dann die empfangene Adresse um den Wert der Anfangsadresse $EA_n$ verringert. Es ergibt sich dann die folgende Rechnung

$$\sum_m^{n-1} AV + AV_a + \sum_1^{m-1} AV - \sum_1^{n-1} AV = AV_a$$

Somit bleibt als Ergebnis dieser vorstehend beschriebenen Schritte in der datenverarbeitenden Einrichtung mit dem Adreßvolumen $AV_n$ der Wert

$AV_a$ übrig, der genau dem Wert der anzusteuernden internen Adresse $J_n$ entspricht.

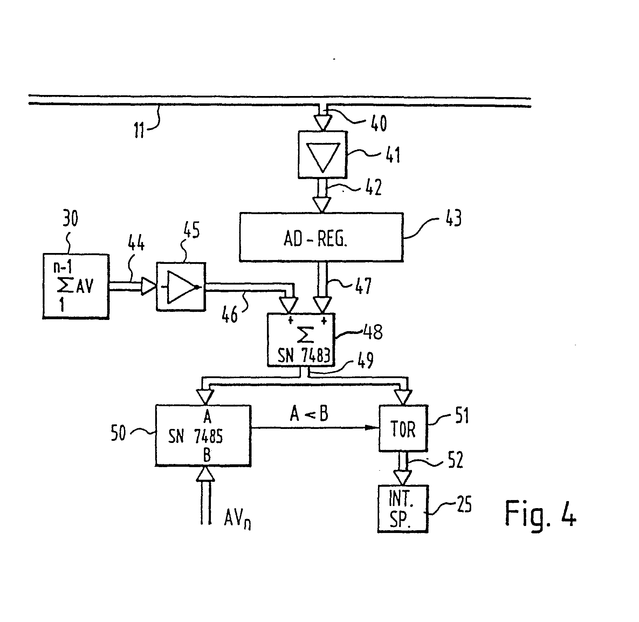

Im folgenden wird anhand der Fig. 3 und 4 die Funktion von Schaltungen beschrieben, mit denen das erfindungsgemäße Verfahren innerhalb einer datenverarbeitenden Einrichtung durchgeführt werden kann, die einer der in Fig. 1 gezeigten Einrichtungen 12 bis 14 entsprechen kann. Fig. 3 zeigt den für das Aussenden einer Adresse relevanten Teil, Fig. 4 den für das Empfangen einer Adresse relevanten Teil einer datenverarbeitenden Einrichtung, die innerhalb des in Fig. 2 gezeigten Gesamtadreßvolumens das Adreßvolumen $AV_n$ haben möge. Diese Einrichtung enthält einen Prozessor 20 und einen internen Speicher 25 und ist mit dem Bus 11 über Signalwege 34 und 40 verbunden.

Wenn die datenverarbeitende Einrichtung über den Bus 11 mit einer anderen datenverarbeitenden Einrichtung in Verbindung treten soll, so muß der dabei erfolgende Informationsaustausch dadurch eingeleitet werden, daß der Prozessor 20 die Adresse einer Speicherzelle bzw. eines Speicherabschnitts einer anderen datenverarbeitenden Einrichtung erzeugt. Diese Adresse wird auf den internen Bus 21 geleitet, über den der Prozessor auch mittels interner Adressen direkt mit dem internen Speicher 25 korrespondieren kann. Die Adresse gelangt dabei über den Signalweg 22 auch auf den Eingang B eines Vergleichers 24 vom Typ SN7485, dessen Eingang A mit einem Wert gespeist wird, der dem Adreßvolumen $AV_n$ des internen Speichers 25 entspricht. Außerdem wird die von dem Prozessor 20 erzeugte Adresse über den Signalweg 32 dem einen Eingang einer Addierschaltung 29 vom Typ SN7483 zugeführt, deren anderer Eingang über einen Signalweg 31 mit einem Wert gespeist wird, der der Summe der Adreßvolumina der in der in Fig. 2 gezeigten Ordnung vorhergehenden datenverarbeitenden Einrichtungen bzw. deren internen Speicher entspricht. Dieser Wert ist in der datenverarbeitenden Einrichtung fest eingestellt, wozu eine Vorrichtung 30 dient, die auch als Codierschalter bezeichnet werden kann. Ein solcher Codierschalter kann eine mechanisch oder elektronisch arbeitende Schaltervorrichtung sein, die bei der Installation der datenverarbeitenden Einrichtung auf einen Wert einstellbar ist, der in bereits beschriebener Weise der Anfangsadresse des internen Speichers 25 entspricht.

Der Vergleicher 24 entscheidet, ob die ihm über den Eingang B zugeführte Adresse in das Adreßvolumen $AV_n$ der datenverarbeitenden Einrichtung paßt oder nicht. Wenn sie einen größeren Wert als das Adreßvolumen $AV_n$ hat, so wird über den Ausgang A < B des Vergleichers 24 ein Steuersignal abgegeben, welches einen externen Speicherzugriff kennzeichnet. Ist das Vergleichsergebnis kleiner oder gleich dem Adreßvolumen $AV_n$, so wird über den Ausgang A ≥ B ein Steuersignal abgegeben, welches einen internen Zugriff kennzeichnet, was besagt, daß der Prozessor 20 direkt mit dem internen Speicher 25 korrespondieren kann.

Das über den Signalweg 26 abgegebene Steuersignal gelangt über eine Ablaufsteuerung 28 auf eine Steuerschaltung 27, die auch als Bustreiber zu bezeichnen ist. Das Steuersignal gibt die Ausgabe der in der Addierschaltung 29 gebildeten Summe aus der erzeugten Adresse und den mit der Vorrichtung 30 erzeugten Wert frei, so daß die so gebildete Summenadresse, die über den Signalweg 33 dem Bustreiber 27 zugeführt wird, über den Signalweg 34 auf den Bus 11 weitergeleitet werden kann.

Die Ablaufsteuerschaltung 28 erzeugt eine vorgegebene zeitliche Koordination der Durchschaltung des Bustreibers 27 in Übereinstimmung mit der speziellen Betriebsart des Mehrfachleitungssystems, so daß die über den Signalweg 34 auf den Bus 11 geleitete Adresse in Abstimmung bzw. Synchronisation mit dem Busbetrieb weitergeleitet wird.

Der Empfang einer Adresse, die über den Bus 11 übertragen wurde, erfolgt mit der in Fig. 4 gezeigten Schaltung. Die Adressensignale gelangen über den Signalweg 40 auf einen Signalempfänger 41, der sie ggf. nach Verstärkung über den Signalweg 42 einem Adreßregister 43 zuführt. Aus dem Adreßregister 43 wird die Adresse über den Signalweg 47 einer Summierschaltung 48 vom Typ SN 7483 zugeführt, die eine Subtraktion um einen Wert bewirkt, der der Anfangsadresse des internen Speichers 25 entspricht. Dieser Wert wurde anhand der Fig. 3 bereits erläutert und wird von der Vorrichtung 30 über den Signalweg 44 sowie einen Inverter 45 und einen Signalweg 46 der Summierschaltung 48 zugeführt. Der Inverter 45 bewirkt durch Invertieren, daß die Summierschaltung eine Subtraktion vornimmt, so daß an ihrem Ausgang über den Signalweg 49 eine Adresse abgegeben wird, die der über den Bus 11 empfangenen Adresse, vermindert um den in der Vorrichtung 30 erzeugten Wert, entspricht. Diese verminderte Adresse gelangt auf einen Vergleicher 50 vom Typ SN 7485, mit dem festgestellt wird, ob die Adresse in das Adreßvolumen $AV_n$ paßt, welches für den internen Speicher 25 vorgesehen ist. Ist dies der Fall, so wird an dem Ausgang A < B des Vergleichers 50 ein Steuersignal abgegeben, welches eine Torschaltung 51 öffnet, so daß die empfangene Adresse dann über einen Signalweg 52 zum internen Speicher 25 gelangt.

Wenn der Vergleicher 50 feststellt, daß die empfangene Adresse nicht in das Adreßvolumen $AV_n$ paßt, so wird die Torschaltung 51 nicht geöffnet, so daß der interne Speicher 25 nicht angesteuert werden kann. Eine solche Ansteuerung erfolgt dann in einer der anderen datenverarbeitenden Einrichtungen, in deren Adreßvolumen die empfangene Adresse paßt. Auf diese Weise erfolgt automatisch die Auswahl der jeweils richtigen datenverarbeitenden Einrichtung.

Die Vorrichtung 30 kann, wie beschrieben, ein mechanischer oder elektronischer Codierschalter sein. Sie kann auch als Register aufgebaut sein, welches von einer beliebigen Stelle des Mehrfachleitungssystems aus eingestellt werden kann. Es ist dann beispielsweise möglich, durch eine Programmsteuerung den jeweils mit der Vorrichtung 30 erzeugten Wert zu verändern und Verlagerungen der datenverarbeitenden Einrichtungen innerhalb der in Fig. 2 gezeigten Reihenfolge vorzunehmen.

## Patentansprüche

1. Schaltungsanordnung zum Adressieren der jeweils ein Adreßvolumen aufweisenden Speicher (25) mehrerer datenverarbeitender Einrichtungen (12 bis 16) in einem Mehrprozessorsystem mit Systembus (11), in dem jeder auf einen Speicher (25) zugreifende Prozessor (20) die Adresse einer jeden Speicherzelle des Mehrprozessorsystems erzeugen kann, wobei jeder Prozessor (20) auf den ihm zugeordneten Speicher (25) auf einem internen Zugriffspfad (21) ab Adresse Null und auf einen externen Speicher (25) über den Systembus (11) unter einer externen Adresse zugreift, die auf die Anfangsadresse des durch Aneinanderreihen der einzelnen Adreßvolumina gebildeten Gesamtadreßvolumens bezogen ist, dadurch gekennzeichnet, daß die externe Adresse ($E_n$) im zugreifenden Prozessor erzeugt wird, indem zunächst eine auf dessen Adresse Null bezogene Zwischenadresse ($E_n - EA_m$) gebildet wird, die dann um den Wert der externen Anfangsadresse ($EA_m$) seines zugeordneten Speichers (25) erhöht wird, und daß jede im Zuge eines Speicherzugriffs über den Systembus (11) empfangene Adresse ($E_n$) in jedem empfangenden Prozessor (20) um den Wert der externen Anfangsadresse ($EA_n$) des ihm zugeordneten Speichers (25) verringert wird.

2. Schaltungsanordnung nach Anspruch 1, dadurch gekennzeichnet, daß jede von einem Prozessor für einen Zugriff berechnete Adresse einem Vergleich mit einer das Adreßvolumen des dem Prozessor zugeordneten Speichers angebenden Größe unterzogen wird und abhängig von dem Vergleichsergebnis dem zugeordneten Speicher zugeführt oder auf den Systembus geleitet wird.

3. Schaltungsanordnung nach Anspruch 1 oder 2, dadurch gekennzeichnet, daß jede datenverarbeitende Einrichtung (12 bis 16) des Mehrprozessorsystems (Fig. 1) eine Vorrichtung (30) zur Abgabe einer die externe Anfangsadresse ihres Speichers (25) angebenden Größe in Form eines mechanischen oder elektronischen Codierschalters oder eines Registers enthält.

## Claims

1. Circuit arrangement for adressing the memories (25) which respectively have an address volume, of a plurality of data-processing units (12 to 16) in a multi-processor system having a system bus (11), in which system each processor (20) accessing a memory (25) can generate the address of each memory cell within the multi-processor system, wherein each processor (20) accesses its own memory (25) via an internal access path (21) beginning with address zero and an external memory (25) via the system bus (11) using an external address related to the starting address of the total address volume consisting of the individual address volumes arranged in series, characterized in that the external address ($E_n$) is generated within the accessing processor by firstly generating an intermediate address ($E_n - EA_m$) relating to the processor's address zero and which intermediate address is then increased by the value of the external starting address ($EA_m$) of the processor's own memory (25), and that each address received ($E_n$) via the system bus (11) during a memory access is decreased within each receiving processor (20) by the value of the external starting address ($EA_n$) of the memory (25) allocated to said receiving processor (20).

2. The circuit arrangement according to claim 1, characterized in that each address calculated for access by a processor is subjected to a comparison with a value representing the address volume of the memory allocated to the processor and, depending on the comparison result, is fed to the allocated memory or to the system bus.

3. The circuit arrangement to claim 1 or 2, characterized in that each data-processing unit (12 to 16) of the multi-processor system (fig. 1) comprises a device (30) in the form of a mechanical or electronical code switch or a register for delivering a value representing the external starting address of its memory (25).

## Revendications

1. Dispositif pour l'adressage des mémoires (25) comprenant un volume d'adresses de chacune de plusieurs unités de traitement de données (12 à 16) dans un système multiprocesseur avec un bus de système (11) dans lequel chaque processeur (20) accédant à une mémoire (25) peut produire l'adresse de chaque cellule de mémoire du système multiprocesseur, dans lequel chaque processeur (20) accède à la mémoire (25) qui lui correspond par une voie d'accès interne (21) à partir de l'adresse zéro et à une mémoire externe (25) par le bus de système (11) sous une adresse externe qui est tirée de l'adresse initiale du volume d'adresses total composé par des rangées voisines de volumes d'adresses individuels, caractérisé en ce que l'adresse externe ($E_n$) est produite dans le processeur accédant, du fait qu'il est d'abord formé une adresse intermédiaire ($E_n - EA_m$) tirée de son adresse zéro, qui est ensuite augmentée de la valeur de l'adresse externe initiale ($EA_m$) de sa mémoire (25) correspondante, et en ce que chaque adresse ($E_n$) reçue au cours d'un accès à une mémoire par l'intermédiaire du bus de système (11) est réduite dans chaque processeur en cours de réception (20) de la valeur de l'adresse externe initiale ($EA_n$) de la mémoire (25) corrspondante.

2. Dispositif selon la revendication 1, caractérisé en ce que chaque adresse calculée par un processeur pour un accès subit une comparaison avec une grandeur indiquant le volume d'adresses de la mémoire correspondante au processeur et selon le résultat de la comparaison, elle est dirigée jusqu'à la mémoire correspondante ou fournie au bus de système.

3. Dispositif selon la revendication 1 ou 2, caractérisé en ce que chaque dispositif de traitement de données (12 à 16) du système multiprocesseur (figure 1) comprend un dispositif (30) pour fournir une grandeur indiquant l'adresse externe initiale de sa mémoire (25) sous la forme d'un commutateur de codage mécanique ou électronique ou d'un registre.

| | S/E | DMA | DATEN-ENDGE. | 16 |

2 $\frac{1}{4}$ - 4MB

| | S/E | GLOBAL SPEICHER 0 - 1$\frac{3}{4}$ MB | 15 |

1$\frac{1}{2}$ - 2$\frac{1}{4}$ MB

| | S/E | INTERNER SPEICHER I-BUS 0- $\frac{3}{4}$ MB PROCESSOR | 14 |

$\frac{1}{2}$ - 1$\frac{1}{2}$ MB

| | S/E | INTERNER SPEICHER I - BUS 0 - 1 MB PROCESSOR | 13 |

0 - $\frac{1}{2}$ MB

| | S/E | INTERNER SPEICHER I - BUS 0 - $\frac{1}{2}$ MB PROCESSOR | 12 |

11

Fig. 1

EXTERNER
ADRESSBEREICH

INTERNER
ADRESSBEREICH
( I - BUS )

Fig. 2

Fig.3

Fig. 4